# EUROPEAN PATENT SPECIFICATION

(11) **EP 3 199 304 B1**
(45) Date of publication and mention of the grant of the patent: **21.10.2026**
(21) Application number: 17151453.2
(22) Date of filing: 13.01.2017
(51) Int. Cl.: B25H 1/00, B23B 45/14

(54) **COUNTERBALANCE SYSTEM FOR UPPER HORIZONTAL SURFACE DRILLING OPERATIONS**
GEWICHTSAUSGLEICHSSYSTEM FÜR OBEREN HORIZONTALEN OBERFLÄCHENBOHROPERATIONEN
SYSTÈME DE CONTREPOIDS POUR DES OPÉRATIONS DE PERÇAGE DE SURFACE HORIZONTALE SUPÉRIEURE

(30) Priority: 29.01.2016 US 201615010580
(43) Date of publication of application: 02.08.2017
(73) Proprietor: The Boeing Company, Arlington, VA 22202 (US)
(72) Inventor: KRAFT, Jerome C., Chicago, IL Illinois 606061596 (US); NEWTON, Andrew P., Chicago, IL Illinois 60606-1596 (US)
(74) Representative: Arnold & Siedsma

(56) References cited:
- DE-A1- 1 602 786
- DE-A1- 2 626 945
- FR-A1- 2 912 672
- GB-A- 2 299 285
- JP-A- H10 175 107
- US-A- 2 837 939
- US-A- 4 279 552
- US-A1- 2006 147 284

## Description

### FIELD

The present disclosure relates to a counterbalance system for upper horizontal surface drilling operations.

GB 2 299 285 A states in its abstract: "A drill guide comprises a slide plate 4 with a drill clamping collar movable along guide rods 2 toward a base plate 1. Balancing springs 3 and a depth gauge 7 are provided". GB 2 299 285A further states, in paragraph 1 that: "This invention relates to a portable electric drill guide", and in paragraph 2 that: "Accurate angular boring in the perpendicular is obtained for example, in the vertical with a pedestal drill, and in the horizontal with a lathe. Both of these systems are impracticable in certain applications of domestic "do it yourself uses, as they are both relatively heavy, cumbersome, expensive and are inhibited by their restricted capacities". GB 2 299 285 A further states in paragraph 10: "Referring to the drawing, the drill guide comprises a base plate with slip resistant base pad (1), guide rods (2), compression resistant springs (3), a slide plate with integral drill collar clamp (4), stop ends (5), a means of tightening and slackening the drill collar clamp (6), depth gauge (7), depth gauge clamp (8), and a means of tightening and slackening the depth gauge (9), example of electric drill (10)."

This disclosure pertains to a counterbalance system that employs one or more springs to support a large motor drill on an upper horizontal work surface, for example on the tops of drill jigs or bushings. The spring has a spring force that supports the drill at a position above the work surface that enables the drill to slide across the work surface to selectively position the drill over a drill bushing through which a drilling operation is to be performed. The force of the spring allows a user of a drill supported on the counterbalance system to push downwardly on the drill and compress the spring when performing a drilling operation at a first position of the drill relative to the work surface. On removal of the downward directed force exerted by the user of the drill, the spring pushes the drill upwardly to disengage the drill from the work surface. The user of the counterbalance system can then slide the counterbalance system and the drill across the top of the work surface to other positions on the work surface where drilling operations are to be performed.

### BACKGROUND

Large motor drills, for example orbital drills, are used in the aircraft construction industry to drill holes in horizontal surfaces of aircraft components. Examples of such aircraft horizontal surfaces include upper wing surfaces, upper horizontal stabilizer surfaces, fuselage crown surfaces, floor surfaces, etc. The large motor drills used for drilling holes in the horizontal surfaces can weigh as much as 50 pounds (22.6 kilograms). An operator of the drill may lift the drill weight between each hole drilled. Operators are at times in a kneeling position when drilling these holes. The repetitive lifting of the drill by the operator of the drill may create ergonomic issues.

Counterbalance arms have been used to assist the operator of a large motor drill in lifting the drill. In the construction of a typical counterbalance arm, one end is connected to the drill and the opposite end is mounted to a hard structure of the aircraft assembly area, for example a structural frame member of an aircraft assembly building. However, the construction of an aircraft assembly building does not always support requirements for a counterbalance arm to be mounted to a structure of the building. Additionally, counterbalance arms are set up to enable the performance of a particular drilling operation, and then removed when the drilling operation is completed or a new drilling operation is to be performed. This adds to the cycle time of performing drilling operations on a particular component of an aircraft construction. Also, counterbalance arms may be relatively expensive. Furthermore, employing a counterbalance arm to assist in performing a particular drilling operation on a particular component of an aircraft construction can significantly increase the operating footprint, or the area of the aircraft where an operator is performing a drilling operation. This can negatively impact a particular drilling operation cycle time when multiple operators must work within a limited space or area of the aircraft being constructed.

Counterbalance reels have also been employed to support or suspend large motor drills above an area of an aircraft construction where a particular drilling operation is to take place. However, counterbalance reels require overhead support, for example an overhead structure of an aircraft assembly building to react the load or support the weight of the large motor drill. This may not be a viable option when performing drilling operations in upper horizontal surfaces of aircraft components. Additionally, like the counterbalance arms, counterbalance reels require additional set up time and tear down time, which negatively impacts the cycle time of performing a particular drilling operation.

### SUMMARY

According to the present invention there is provided an assembly according to claim 1 and a method for counterbalancing a cutting tool according to claim 14.

The counterbalance system of this disclosure includes an apparatus and its method of use in performing cutting or drilling operations in an upper horizontally oriented surface of an aircraft component, for example an upper wing surface, an upper horizontal stabilizer surface, a fuselage crown surface, a floor surface, etc.

The apparatus includes a base plate that has a flat bottom surface. The flat bottom surface of the base plate facilitates the sliding movement of the base plate across the horizontally oriented work surface into which cutting operations are being performed, for example over the top surfaces of drill jigs or bushings or over the top surface of an aircraft component.

A central hole extends through the base plate. The central hole is configured to accommodate a cutting tool, for example a cutting bit that moves vertically through the central hole relative to the base plate when performing a cutting operation.

A top surface of the base plate extends around the central hole. The top surface can extend completely around the central hole, or around only a portion of the central hole.

A plurality of coil springs are fixed to the top surface of the base plate. The coil springs extend upwardly from the top surface along a line that is perpendicular to the bottom surface of the base plate. Each of the coil springs extends upwardly from the top surface to a top end of the coil spring.

A body is fixed to the top ends of the coil springs. The body has a support surface that is configured to support a cutting tool on the support surface, such as a large motor drill.

An alignment device is provided between the base plate and the body. In the counterbalance system of this disclosure, the alignment device is provided by a plurality of guide rods that extend upwardly from the top surface of the base plate. The guide rods extend through the body, mounting the body on the guide rods for reciprocating movements of the body on the guide rods. The guide rods maintain alignment of the body with the base plate during reciprocating movements of the body relative to the base plate.

The coil springs, when not compressed position and hold the body in a first position of the body relative to the base plate where the body is spaced a first distance from the base plate. The coil springs, when compressed in response to a downward directed load exerted on the body, position and hold the body in a second position of the body relative to the base plate where the body is spaced a second distance from the base plate. The second distance is smaller than the first distance.

The support surface of the body and the coil springs are configured to support a cutting tool on the support surface at the first position of the body relative to the base plate with the coil springs not being compressed. The support surface of the body and the coil springs are configured to support the cutting tool on the support surface at the second position of the body relative to the base plate in response to a downward directed load exerted on the cutting tool that exerts the downward directed load on the body and compresses the coil springs.

In use of the counterbalance system, the bottom surface of the base plate is positioned on a work surface of an aircraft component where a cutting operation is to be performed. For example, the bottom surface of the base plate could be positioned on the tops of drill jigs or bushings through which a cutting operation is to be performed on a surface of an aircraft component. Alternatively, the bottom surface of the base plate could be positioned on the surface of the aircraft component into which a cutting operation is to be performed.

A cutting tool, such as an orbital power feed drill motor, is then positioned on and supported by the support surface of the body. The cutting tool is positioned on the support surface with a cutting bit of the cutting tool extending downwardly from the cutting tool, through the opening through the support surface and into the central hole of the base plate. The coil springs and the support surface of the body position a distal end of the cutting bit above the bottom surface of the base plate. This enables the base plate to be moved from one position of the base plate relative to the work surface into which a cutting operation is to be performed, to a second position of the base plate relative to the work surface into which a cutting operation is to be performed.

The operator slides the cutting drill motor and counterbalance apparatus across the surfaces of the drill jigs and/or drill bushings until the cutting tool drill motor and counterbalance apparatus are located above a desired drill jig and/or drill bushing. The operator then pushes down on the cutting tool drill motor to overcome the spring force of the coil springs, and thus indexes the cutting tool drill motor into the selected desired drill bushing. The operator then locks the cutting tool drill motor into the selected drill bushing. This locking of the cutting tool drill motor to the selected drill bushing maintains a compression of the counterbalance coil springs, and requires no further downward application of force by the operator.

The operator then powers on the cutting tool drill motor, which rotates the cutting bit of the cutting tool drill motor, advances the rotating cutting bit into the work surface of the aircraft component into which the cutting operation is being performed, then retracts the rotating cutting bit from the hole formed and powers off the cutting tool drill motor. The operator then unlocks the cutting tool drill motor from the drill bushing after the hole has been drilled. The spring force of the counterbalance apparatus coil springs then lift the cutting tool drill motor out of the drill bushing. This frees up the cutting tool drill motor and the counterbalance apparatus, enabling the operator to then slide the cutting tool drill motor and counterbalance apparatus across the surfaces of the drill jigs and/or drill bushings to the next desired drill jig and/or drill bushing location.

The features, functions, and advantages that have been discussed can be achieved independently in various embodiments or may be combined in yet other embodiments, further details of which can be seen with reference to the following description and drawings.

### BRIEF DESCRIPTION OF THE DRAWINGS

Further features of the counterbalance apparatus and its method of use are set forth in the following detailed description and drawings.
Figure 1 is a representation of a perspective top view of the counterbalance apparatus of this disclosure.
Figure 2 is a side elevation view of the apparatus from the direction of the arrow "2" in Figure 1.
Figure 3 is a side elevation view of the apparatus from the direction of the arrow "3" in Figure 1.
Figure 4 is a side elevation view of the apparatus from the direction of the arrow "4" in Figure 1.
Figure 5 is a side elevation view of the apparatus from the direction of the arrow "5" in Figure 1.

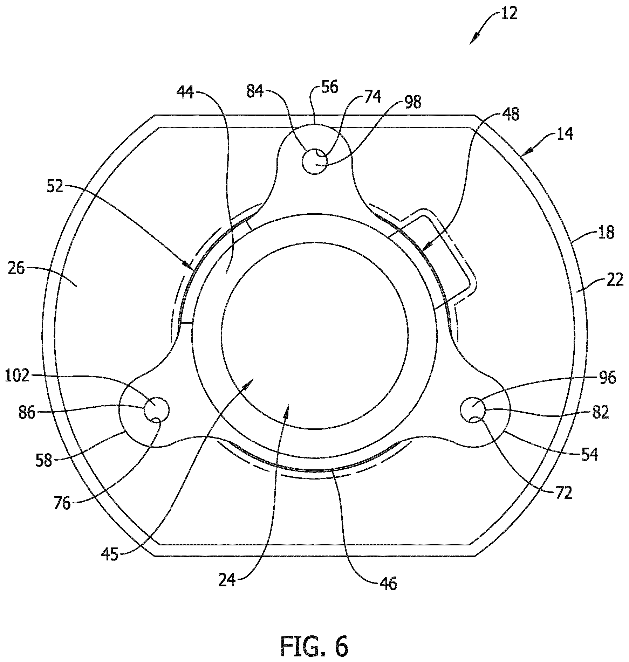

Figure 6 is a top plan view of the apparatus.

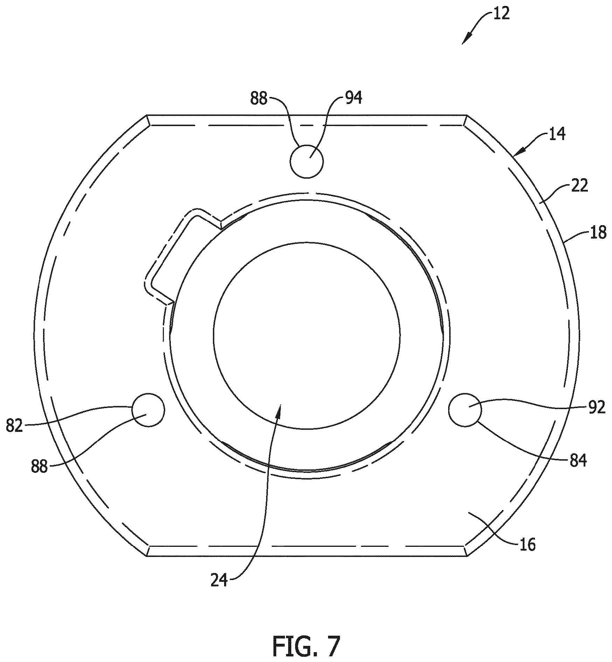

Figure 7 is a bottom plan view of the apparatus.
Figure 8 is a side elevation view of the counterbalance apparatus supporting a cutting tool above a work surface into which cutting operations are to be performed.
Figure 9 is a perspective view of the counterbalance apparatus supporting the cutting tool above the work surface into which cutting operations are to be performed.
Figure 10 is a perspective view of the counterbalance apparatus with a drill motor mounted in the counterbalance apparatus, with the counterbalance apparatus in a fully compressed state.

### DESCRIPTION

The counterbalance system of this disclosure overcomes the disadvantages associated with operators manually moving large motor drills in performing drilling operations in horizontal aircraft component surfaces. The counterbalance system also overcomes the disadvantages of employing counterbalance arms or counterbalance reels to counterbalance the weight of large motor drills used in performing drilling operations in horizontal aircraft component surfaces.

The counterbalance system has an extremely small footprint in the aircraft construction work area when compared to the footprints of counterbalance arms and counterbalance reels. The counterbalance system does not significantly impact or increase the footprint of the operator of the system in the construction area of the aircraft.

The counterbalance system reacts loads, for example the weight of the large motor drill being used in a drilling operation, against an existing structure of the aircraft on which the drilling operation is being performed. In contrast, counterbalance arms and counterbalance reels must react the load of the large motor drill off of a wall of an aircraft assembly building, off of an overhead structure of the aircraft assembly building, or off of some separate support infrastructure of the aircraft assembly building.

The counterbalance system requires a substantially shorter setup time and tear down time than that of counterbalance arms and counterbalance reels.

The counterbalance system requires no additional modification to any existing drilling tools or cutting tools and requires no infrastructure to mount a tool to the counterbalance system.

The counterbalance system dramatically reduces a drill extraction force or lifting force exerted by the operator of the large motor drill in removing the drill from a drill bushing by applying a reaction force to the large motor drill that is equal to the weight of the drill and is normal to the drill path.

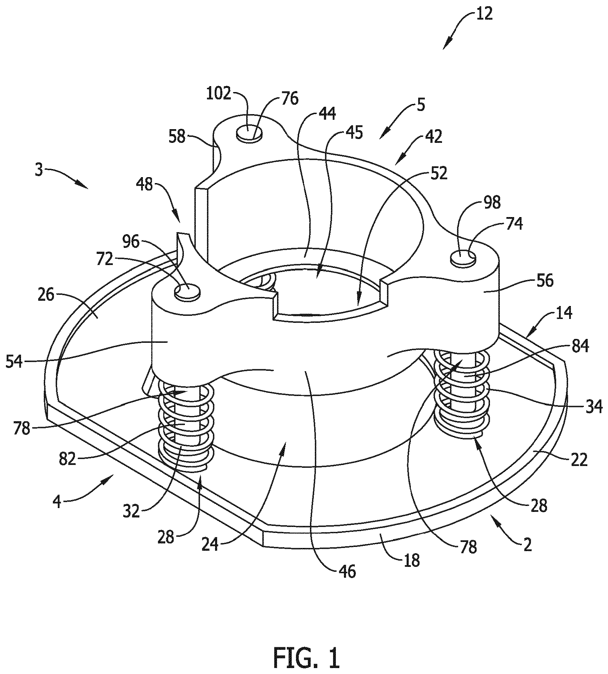

Figure 1 is a representation of the counterbalance apparatus 12 employed in the counterbalance system of this disclosure in performing cutting or drilling operations into an upper horizontally oriented surface of an aircraft component. The different parts of the apparatus 12 to be described can be constructed of any types of materials that provide the parts with sufficient strength to perform the method of using the apparatus in performing cutting or drilling operations into a work surface such as an upper horizontally oriented surface of an aircraft component.

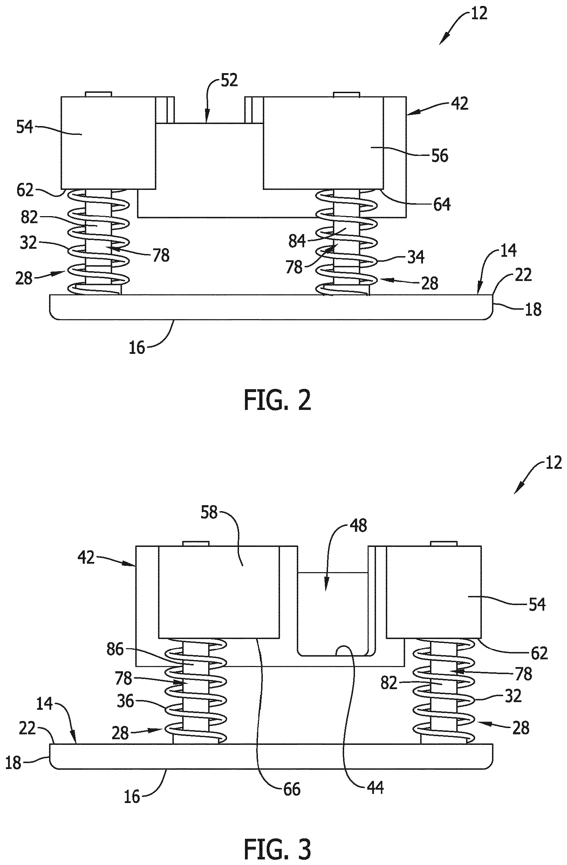

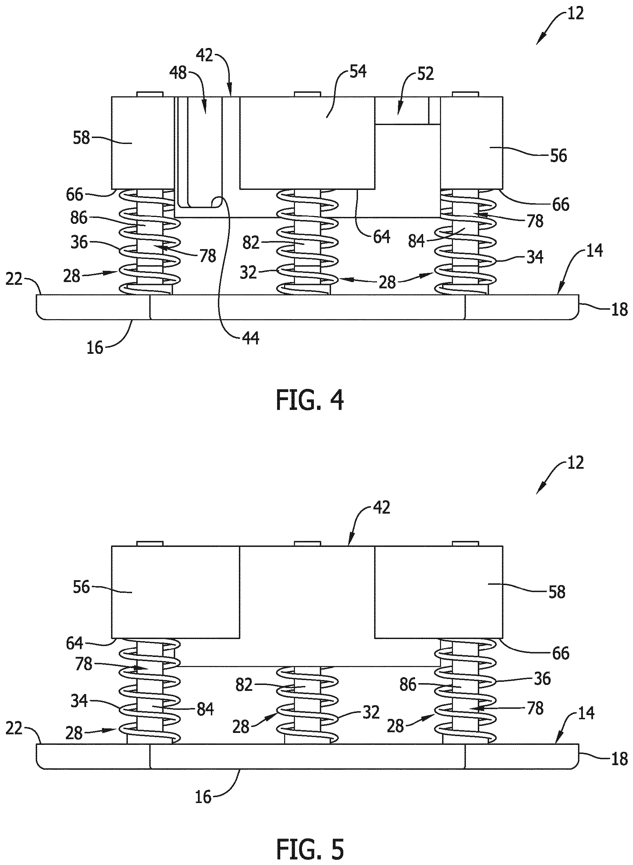

The apparatus 12 includes a base plate 14 that has a flat bottom surface 16. The bottom surface 16 is generally oriented in a horizontal plane when performing cutting operations with the apparatus 12. The base plate 14 has a peripheral edge 16 with a general circular configuration. The peripheral edge 18 of the base plate 14 could have other equivalent configurations to the general circular configuration represented in Figure 1. The shape and size of the base plate 14 is dictated by the separation distance between adjacent drill bushings for a given application, such that the counterbalance apparatus 12 can react and stay level on top of a plurality of the drill bushings. Referring to Figures 2-5, it can be seen that the peripheral edge 18 has a configuration of a curved, upturned lip as the peripheral edge 18 extends from the bottom surface 16 of the base plate 14 to a top edge 22 of the peripheral edge. The flat bottom surface 16 of the base plate 14 and the curved, upturned lip of the peripheral edge 18 facilitate the sliding movement of the base plate across the horizontally oriented work surface into which cutting operations are to be performed, for example, over the top surfaces of drill jigs or bushings, or the top surface of an aircraft component.

A central hole 24 extends through the base plate 14. In use of the counterbalance apparatus 12 with a locking power feed drill motor, the central hole 24 is configured to accommodate the locking nose of the drill motor and the cutting bit. The nose of the drill motor must pass through the central hole 24 of the counterbalance apparatus 12 so that it can index/lock directly with one of the drill bushings across which the counterbalance apparatus 12 slides. The central hole 24 is represented in the drawing figures as having a general circular configuration. However, the central hole 24 could have other equivalent configurations.

The base plate 14 has a top surface 26 that extends around the central hole 24. The top surface 26 is represented as a flat surface that extends completely around the central hole 24. The top surface 26 could have other configurations and it is not necessary that the top surface extend completely around the central hole 24.

A biasing device 28 is provided on the top surface 26 of the base plate 14. The biasing device 28 is configured to exert a biasing force upwardly away from the top surface 26 of the base plate 14. In the counterbalance system of this disclosure, the biasing device 28 is provided by a plurality of coil springs 32, 34, 36 that are fixed to the top surface 26 of the base plate 14. The coil springs 32, 34, 36 are equally spatially arranged around the central hole. Other equivalent arrangements of the springs 32, 34, 36 could also be employed. The coil springs 32, 34, 36 extend upwardly from the top surface 26 along center axes (not shown) of the springs that are perpendicular to the bottom surface 16 of the base plate 14. Each of the coil springs 32, 34, 36 extend upwardly from the top surface 26 to top ends of the springs (not shown) that are positioned in a plane that is substantially parallel with the bottom surface 16 of the base plate 14.

A body 42 is fixed to the top ends of the coil springs 32, 34, 36. As represented in the drawing figures, the body 42 has a general cylindrical configuration. However, the body could have other equivalent configurations. The body 42 has a support surface 44 inside the body. The support surface 44 is configured to support a cutting tool on the support surface, such as a large motor drill. As represented in the drawing figures, the support surface 14 has a general annular configuration with an opening 45 through the support surface. The support surface 44 could have other equivalent configurations. The body 42 also has a side wall 46 that extends upwardly from the support surface 44.

As represented in the drawing figures, the side wall 46 has a general cylindrical configuration and extends upwardly from a radially outer edge of the support surface 44. The side wall 46 has a specific configuration to engage with a cutting tool, such as a large motor drill, to securely position the drill relative to the body 42. The side wall 46 represented in the drawing figures is configured to engage around more than half of the housing of a drill used with the apparatus 12. The side wall 46 is shown having a pair of notches 48, 52 in the side wall. These notches 48, 52 are specifically positioned in the side wall 46 to accommodate portions of a large motor drill in the notches when the body support surface 44 supports the drill and the side wall 46 engages around an outer periphery of the housing of the drill.

A plurality of lobes 54, 56, 58 project radially outwardly from the body side wall 46. There are three lobes 54, 56, 58 represented on the body 42 in the drawing figures. The lobes 54, 56, 58 are spatially arranged around the body side wall 46 to correspond to the positions of the three coil springs 32, 34, 36 that project upwardly from the top surface 26 of the base plate 14. Bottom surfaces 62, 64, 66 of the respective three lobes 54, 56, 58 are fixed to the top ends of the respective coil springs 32, 34, 36. The bottom surfaces 62, 64, 66 of the three lobes 54, 56, 58 could be provided with cavities that receive the top ends of the coil springs 32, 34, 36 in fixing the coil springs to the lobes. Other equivalent means of securing the top ends of the coil springs 32, 34, 36 to the respective lobe bottom surfaces 62, 64, 66 could also be employed. The three lobes 54, 56, 58 have respective cylindrical bores 72, 74, 76 that extend completely through the lobes. The cylindrical bores 72, 74, 76 are axially aligned with the center axes (not shown) of the respective coil springs 32, 34, 36.

An alignment device 78 is provided between the base plate 14 and the body 42. In the counterbalance system of this disclosure, the alignment device 78 is provided by a plurality of guide rods 82, 84, 86. Each of the guide rods 82, 84, 86 has a cylindrical length that extends between bottom ends 88, 92, 94 of the respective guide rods and top ends 96, 98, 102 of the respective guide rods. The bottom ends 88, 92, 94 of the respective guide rods 82, 84, 86 are secured to the top surface 26 of the base plate 14 inside of the respective coil springs 32, 34, 36. The guide rod 82, 84, 86 cylindrical lengths that are parallel and extend through the respective lobe cylindrical bores 72, 74, 76. The guide rods 82, 84, 86 have cylindrical exterior surfaces that are dimensioned to fit in sliding engagement inside the respective lobe cylindrical bores 72, 74, 76. Thus, the guide rods 82, 84, 86 mount the body 42 on the guide rods for reciprocating movements of the body on the guide rods relative to the base plate 14.

The coil springs 32, 34, 36, when not compressed, position and hold the body 42 in a first position of the body relative to the base plate 14 where the body is spaced a first distance from the base plate. The coil springs 32, 34, 36, when compressed in response to a downward directed load or force exerted on the body 42, position and hold the body in a second position relative to the base plate 14 where the body is spaced a second distance from the base plate. The second distance is smaller than the first distance.

The support surface 44 of the body 42, the coil springs 32, 34, 36 and the guide rods 82, 84, 86 are configured to support a cutting tool on the support surface 44, such as a large motor drill, with the coil springs not being compressed. The combined spring force of the coil springs 32, 34, 36 is sufficient to support the weight of the drill without the springs being compressed. The support surface 44 of the body 42, the coil springs 32, 34, 36 and the guide rods 82, 84, 86 are configured to support the cutting tool on the support surface at the second position of the body relative to the base plate 14 in response to a downward directed load exerted on the cutting tool that is transmitted through the support surface and body to the coil springs that compresses the coil springs.

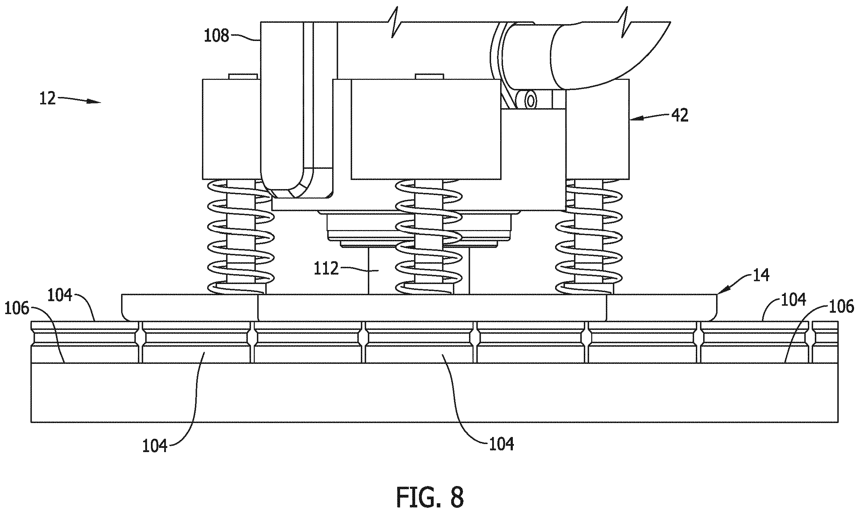

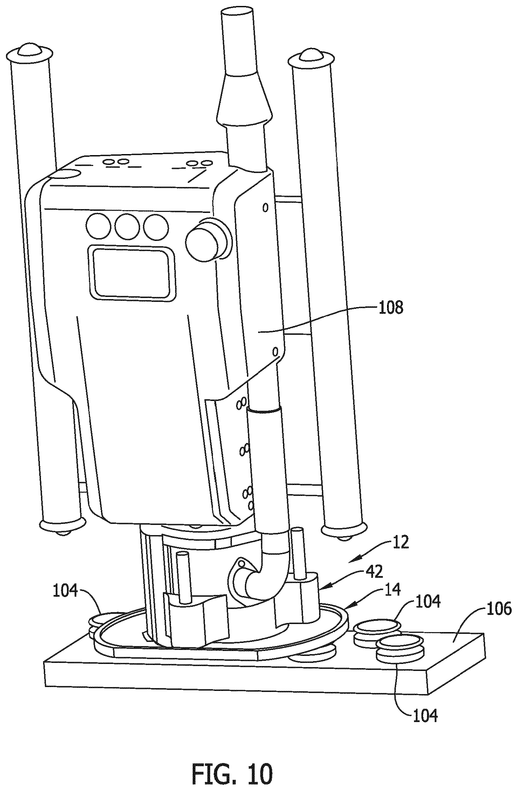

In use of the counterbalance system, the bottom surface 16 of the base plate 14 is positioned on a work surface of an aircraft component where a cutting operation is to be performed. For example, referring to Figures 8-10, the bottom surface 16 of the base plate 14 could be positioned on the tops of drill jigs or bushings 104 through which a cutting operation is to be performed on a surface 106 of an aircraft component.

A cutting tool 108, such as an orbital, power feed drill motor, is then positioned on and supported by the support surface 44 of the body 42. This is represented in Figure 8. The cutting tool 108 is positioned on the support surface 44 with a cutting bit 112 of the cutting tool extending downwardly from the cutting tool, through the opening through the support surface 44 and into the central hole 24 of the base plate 14. The coil springs 32, 34, 36 and the support surface 44 of the body 42 position a distal end of the cutting bit 112 above the bottom surface 16 of the base plate 14 resting on the tops of the drill jigs or bushings 104. This enables the base plate 14 to slide across the tops of the drill jigs or bushings 104 when moving the apparatus 12 and cutting tool 108 from one position of the apparatus and cutting tool relative to the work surface 106 into which a cutting operation is to be performed, to a second position of the apparatus and cutting tool relative to the work surface into which a subsequent cutting operation is to be performed. The flat bottom surface 16 of the base plate 14 and the upturned peripheral edge 18 of the base plate facilitate the sliding movement of the base plate across the tops of the drill jigs or bushings 104.

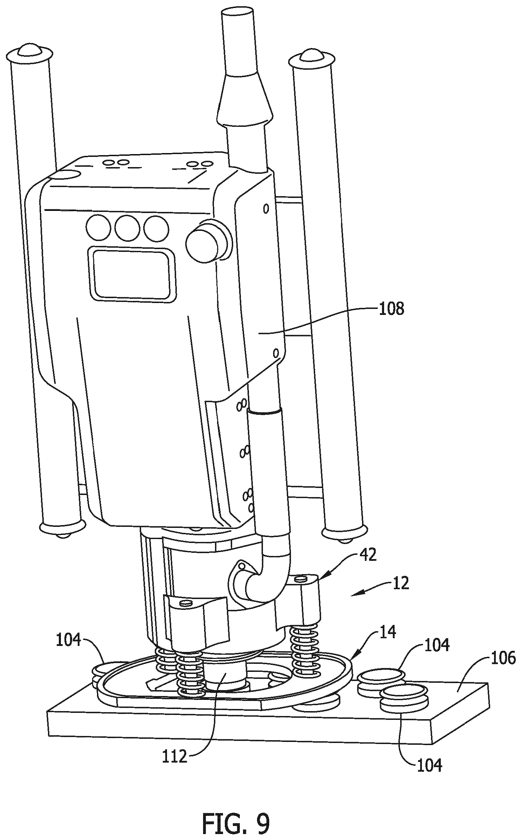

The operator slides the cutting tool 108 and counterbalance apparatus 12 across the surfaces of the drill jigs and/or drill bushings 104 until the cutting tool 108 and the counterbalance apparatus 12 are located above a desired drill jig and/or drill bushing 104. This is represented in Figure 9. The operator then pushes down on the cutting tool 108 to overcome the spring force of the coil springs 32, 34, 36, and thus indexes the cutting tool into the selected desired drill bushing 104. In this state, the nose of the drill motor protrudes below the bottom surface 16 of the base plate 14 such that the drill motor can be locked into the drill bushing. The operator then locks the cutting tool into the selected drill bushing 104. This locking of the cutting tool 108 to the selected drill bushing 104 maintains a compression of the coil springs 32, 34, 36, and requires no further downward application of force by the operator.

The operator then powers on the cutting tool 108, which rotates the cutting bit 112 of the cutting tool 108, advances the rotating cutting bit 112 through the drill bushing 104 and into the work surface 106 of the aircraft component into which the cutting operation is being performed, then retracts the rotating cutting bit 112 from the hole formed and powers off the cutting tool 108. The operator then unlocks the cutting tool 108 from the drill bushing 104 after the hole has been drilled. The spring force of the counterbalance apparatus coil springs 32, 34, 36 then lifts the cutting tool 108 out of the drill bushing 104. This frees up the cutting tool 108 and the counterbalance apparatus 12, enabling the operator to then slide the cutting tool 108 and counterbalance apparatus 12 across the surfaces of the drill jigs and/or drill bushings to the next desired drill jig and/or drill bushing location.

Further, the disclosure comprises the following embodiments.

In an embodiment, the counterbalance apparatus further comprises that the support surface on the body and the spring support a cutting tool on the support surface at the first position of the body relative to the base plate with the spring in the not compressed position of the spring, and the support surface and the spring support the cutting tool on the support surface at the second position of the body relative to the base plate with the spring in the compressed position of the spring in response to a downward directed load exerted on the cutting tool that exerts the downward directed load on the body.

In an embodiment, the counterbalance apparatus further comprises:
an opening through the support surface of the body, the support surface supporting a cutting tool on the support surface with a cutting bit of the cutting tool extending downwardly from the cutting tool, through the opening in the support surface and into the central hole through the base plate where the spring in the first position of the spring relative to the base plate and the support surface of the body position the distal end of the cutting bit above the bottom surface of the base plate.

In an embodiment, the counterbalance apparatus further comprises the spring being one of a plurality of like coil springs that are fixed to the top surface of the base plate, each coil spring of the plurality of coil springs having a top end; and, the body being fixed to the top ends of the plurality of coil springs.

In an embodiment, the counterbalance apparatus further comprises the plurality of coil springs being equally spatially arranged around the central hole through the base plate and the opening through the support surface.

In an embodiment, the counterbalance apparatus further comprises the plurality of coil springs having a combined spring force that, when a cutting tool is supported on the support surface and no external load is exerted on the cutting tool, the plurality of coil springs are in the not compressed positions of the coil springs and position the distal end of the cutting bit above the bottom surface of the base plate.

In an embodiment, the counterbalance apparatus further comprises: the body having at least one side wall extending upwardly from the support surface, the side wall being configured to engage against a portion of a cutting tool supported on the support surface and position the cutting tool relative to the support surface.

In an embodiment, the counterbalance apparatus further comprises: the side wall being configured to engage around at least half of a cutting tool supported on the support surface and position the cutting tool relative to the support surface.

In an embodiment, the counterbalance apparatus further comprises: the base plate having a peripheral edge surface that is curved as the peripheral edge surface extends upwardly from the bottom surface of the base plate to a top end of the peripheral edge surface.

In an embodiment, the counterbalance apparatus further comprises an alignment device fixed to the top surface of the base plate, the alignment device extending upwardly from the top surface and through the body, the alignment device extending through the body being configured to hold the body in alignment with the base plate as the body is moved toward the base plate causing the spring to move to its compressed position, and the body is moved away from the base plate by the spring moving from its compressed position toward its not compressed position.

As various modifications could be made in the construction of the apparatus and its method of operation herein described and illustrated without departing from the scope of the invention, it is intended that all matter contained in the foregoing description or shown in the accompanying drawings shall be interpreted as illustrative rather than limiting. Thus, the scope of the present invention should not be limited by any of the above described exemplary embodiments, but should be defined only in accordance with the following claims appended hereto.

## Claims

1. An assembly comprising:
- a cutting tool (108) comprising a locking power feed drill motor; and
- a counterbalance apparatus (12) for cutting operations on a horizontally oriented surface, wherein the counterbalance apparatus is configured to react loads of the motor drill against an existing structure of an aircraft, the apparatus comprising:
- a base plate (14), the base plate having a bottom surface (16) that is flat, the bottom surface being configured to be oriented horizontally when the bottom surface is positioned on a separate work surface that is oriented horizontally;
- a central hole (24) through the base plate;
- a top surface (26) of the base plate, the top surface extending around the central hole;
- a biasing device (28) on the top surface of the base plate, the biasing device extending upwardly from the top surface to a top end of the biasing device, the biasing device being moveable between a not compressed position of the biasing device relative to the top surface where the biasing device extends a first distance from the top surface and a compressed position of the biasing device where the biasing device extends a second distance from the top surface, the second distance being smaller than the first distance; and,
- a body (42) on the top end of the biasing device, the body (42) having a support surface (44) on the body, the support surface supporting the cutting tool (108), the biasing device when in the not compressed position of the biasing device relative to the top surface positioning and holding the body in a first position of the body relative to the base plate where the body is spaced a first distance from the base plate, and the biasing device when moved to the compressed position of the biasing device relative to the top surface in response to a downward directed load exerted on the body positioning and holding the body in a second position of the body relative to the base plate where the body is spaced a second distance from the base plate, the second distance being smaller than the first distance;
wherein the central hole accommodates a locking nose of the locking power feed drill motor and a cutting bit (112) of the locking power feed drill motor through the central hole, wherein, when the body (42) is in the second position, the nose of the drill motor protrudes below the bottom surface (16) of the base plate (14) such that the drill motor can be locked into a drill bushing (104) on a work surface (106) to be drilled and that the cutting tool is indexable into the drill bushing.

2. The assembly of claim 1, wherein the support surface (44) is on the body (42) and the biasing device (28) support the cutting tool (108) on the support surface at the first position of the body relative to the base plate (14) with the biasing device in the not compressed position of the biasing device, and the support surface and the biasing device support the cutting tool on the support surface at the second position of the body relative to the base plate with the biasing device in the compressed position of the biasing device in response to a downward directed load exerted on the cutting tool that exerts the downward directed load on the body.

3. The assembly of claim 1 or 2, further comprising:
an opening (45) through the support surface (44) of the body (42), the support surface supporting the cutting tool (108) on the support surface with the cutting bit (112) of the cutting tool extending downwardly from the cutting tool, through the opening in the support surface and into the central hole (24) through the base plate (14) where the biasing device in the first position of the biasing device relative to the base plate and the support surface of the body position the distal end of the cutting bit above the bottom surface of the base plate.

4. The assembly of any one of claims 1 to 3, wherein:
the biasing device (28) is one of a plurality of like coil springs (32, 34, 36) that are fixed to the top surface (26) of the base plate (14), each coil spring of the plurality of coil springs having a top end; and,
the body (42) is fixed to the top ends of the plurality of coil springs,
preferably wherein the plurality of coil springs has a combined spring force that, when the cutting tool (108) is supported on the support surface (44) and no external load is exerted on the cutting tool, the plurality of coil springs are in the not compressed positions of the coil springs and position the distal end of the cutting bit (112) above the bottom surface (16) of the base plate.

5. The assembly of claim 4, wherein the plurality of coil springs (32, 34, 36) is equally spatially arranged around the central hole (24) through the base plate (14) and the opening (45) through the support surface (44).

6. The assembly of any one of claims 1 to 5, further comprising:
an alignment device (78) fixed to the top surface (26) of the base plate (14), the alignment device extending upwardly from the top surface and through the body (42), the alignment device extending through the body being configured to hold the body in alignment with the base plate as the body is moved toward the base plate causing the biasing device (28) to move to its compressed position, and the body is moved away from the base plate by the biasing device moving from the compressed position toward the not compressed position.

7. The assembly of any one of Claims 1 to 6, further comprising:
a guide rod (82, 84, 86) on the top surface (26) of the base plate (14), the guide rod extending upwardly from the top surface along a line that is perpendicular to the bottom surface of the base plate, the guide rod extending upwardly from the top surface to a top end (96, 98, 102) of the guide rod, wherein
the body (42) is mounted on the guide rod for reciprocating movements of the body along the guide rod between a first position of the body relative to the base plate and a second position of the body relative to the base plate, wherein the guide rod positions and holds the body directly above the top surface of the base plate, and wherein the guide rod and the support surface (44) of the body position a distal end of the cutting bit in a first position of the distal end of the cutting bit (112) relative to the base plate above the bottom surface (16) of the base plate; and,
the biasing device (28) positions the body at the first position of the body relative to the base plate when no external load is exerted on the body, and the biasing device allowing the body to move from the first position of the body relative to the base plate to the second position of the body relative to the base plate in response to an external load exerted downwardly on the body.

8. The assembly of claim 7, wherein the guide rod is one of a plurality of guide rods (82, 84, 86) that are fixed to the top surface (16) of the base plate (14), the plurality of guide rods being parallel to each other.

9. The assembly of claim 8, wherein the plurality of guide rods (82, 84, 86) are equally spatially arranged around the central hole (24) through the base plate (14).

10. The assembly of any one of claims 1 to 9, wherein the body (42) has at least one side wall (46) extending upwardly from the support surface (44), the side wall being configured to engage against a portion of the cutting tool (108) supported on the support surface and position the cutting tool relative to the support surface.

11. The assembly of claim 10, wherein the side wall (46) is configured to engage around at least half of the cutting tool (108) supported on the support surface (44) and position the cutting tool relative to the support surface.

12. The assembly of any one of claims 1 to 11, wherein the base plate (14) has a peripheral edge (18) that is curved as the peripheral edge extends upwardly from the bottom surface (16) of the base plate to a top end of the peripheral edge.

13. Assembly of any of the preceding claims, wherein the locking power feed drill motor is an aircraft construction motor drill, such as an orbital drill.

14. A method of counterbalancing a cutting tool (108), the method comprising:
positioning a base plate (14) of a counterbalance apparatus (12) at a first position on a work surface into which a cutting operation is to take place;
biasing a body (42) of the counterbalance apparatus away from the base plate;
positioning the cutting tool on the body of the counterbalance apparatus;
exerting a downward directed force on the cutting tool and moving the cutting tool downward against the biasing of the body away from the base plate to a cutting position of the cutting tool, so that the nose of the cutting tool (108) protrudes below a bottom surface (16) of the base plate (14);
locking the cutting tool into a selected drill bushing of a work surface to be drilled; and,
performing the cutting operation into the work surface.
positioning the base plate (14) of the counterbalance apparatus (12) at a second position on the work surface into which a second cutting operation is to take place by sliding the base plate over the work surface.

15. The method of claim 14, further comprising:
unlocking the cutting tool from the selected drill bushing;
removing the downward directed force exerted on the cutting tool (108);
biasing the body (42) of the counterbalance apparatus (12) away from the base plate (14); and,
moving the cutting tool away from the cutting position.

## Patentansprüche

1. Anordnung, umfassend:
- ein Schneidewerkzeug (108), umfassend einen verriegelnden Kraftvorschubbohrmotor; und
- eine Gewichtsausgleichseinrichtung (12) für Schneidevorgänge auf einer horizontal orientierten Oberfläche, wobei die Gewichtsausgleichseinrichtung konfiguriert ist, um Lasten des Motorbohrers gegen eine vorhandene Struktur eines Luftfahrzeugs entgegenzuwirken, die Einrichtung umfassend:
- eine Bodenplatte (14), wobei die Bodenplatte eine untere Oberfläche (16) aufweist, die flach ist, wobei die untere Oberfläche konfiguriert ist, um horizontal orientiert zu sein, wenn die untere Oberfläche auf einer separaten Arbeitsoberfläche positioniert ist, die horizontal orientiert ist;
- ein zentrales Loch (24) durch die Bodenplatte;
- eine obere Oberfläche (26) der Bodenplatte, wobei sich die obere Oberfläche um das zentrale Loch herum erstreckt;
- eine Vorspannvorrichtung (28) auf der oberen Oberfläche der Bodenplatte, wobei sich die Vorspannvorrichtung von der oberen Oberfläche nach oben zu einem oberen Ende der Vorspannvorrichtung erstreckt, wobei die Vorspannvorrichtung zwischen einer nicht komprimierten Position der Vorspannvorrichtung relativ zu der oberen Oberfläche, wobei sich die Vorspannvorrichtung über einen ersten Abstand von der oberen Oberfläche erstreckt, und einer komprimierten Position der Vorspannvorrichtung, wobei sich die Vorspannvorrichtung über einen zweiten Abstand von der oberen Oberfläche erstreckt, bewegbar ist, wobei der zweite Abstand kleiner als der erste Abstand ist; und
- einen Körper (42) an dem oberen Ende der Vorspannvorrichtung, wobei der Körper (42) eine Stützoberfläche (44) an dem Körper aufweist, wobei die Stützoberfläche das Schneidewerkzeug (108) stützt, wobei die Vorspannvorrichtung, wenn sie sich in der nicht komprimierten Position der Vorspannvorrichtung relativ zu der oberen Oberfläche befindet, den Körper in einer ersten Position des Körpers relativ zu der Bodenplatte positioniert und hält, wobei der Körper in einem ersten Abstand von der Bodenplatte beabstandet ist und die Vorspannvorrichtung, wenn sie in die komprimierte Position der Vorspannvorrichtung relativ zu der oberen Oberfläche, als Reaktion auf eine nach unten gerichtete Last, die auf den Körper ausgeübt wird, bewegt wird, den Körper in einer zweiten Position des Körpers relativ zu der Bodenplatte positioniert und hält, wobei der Körper in einem zweiten Abstand von der Bodenplatte beabstandet ist, wobei der zweite Abstand kleiner als der erste Abstand ist;
wobei das zentrale Loch eine Verriegelungsnase des verriegelnden Kraftvorschubbohrmotors und eine Bohrschneide (112) des verriegelnden Kraftvorschubbohrmotors durch das zentrale Loch aufnimmt, wobei, wenn sich der Körper (42) in der zweiten Position befindet, die Nase des Bohrmotors derart unter der unteren Oberfläche (16) der Bodenplatte (14) hervorsteht, dass der Bohrmotor in einer Bohrbuchse (104) auf einer zu bohrenden Arbeitsoberfläche (106) verriegelt werden kann und dass das Schneidewerkzeug in die Bohrbuchse indizierbar ist.

2. Anordnung nach Anspruch 1, wobei sich die Stützoberfläche (44) an dem Körper (42) befindet und die Vorspannvorrichtung (28) das Schneidewerkzeug (108) auf der Stützoberfläche an der ersten Position des Körpers relativ zu der Bodenplatte (14) stützt, wobei sich die Vorspannvorrichtung in der nicht komprimierten Position der Vorspannvorrichtung befindet und wobei die Stützoberfläche und die Vorspannvorrichtung das Schneidewerkzeug auf der Stützoberfläche an der zweiten Position des Körpers relativ zu der Bodenplatte stützen, wobei sich die Vorspannvorrichtung in der komprimierten Position der Vorspannvorrichtung befindet, als Reaktion auf eine nach unten gerichtete Last, die auf das Schneidewerkzeug ausgeübt wird, die die nach unten gerichtete Last auf den Körper ausübt.

3. Anordnung nach Anspruch 1 oder 2, ferner umfassend:
eine Öffnung (45) durch die Stützoberfläche (44) des Körpers (42), wobei die Stützoberfläche das Schneidewerkzeug (108) auf der Stützoberfläche stützt, wobei sich die Bohrschneide (112) des Schneidewerkzeugs von dem Schneidewerkzeug nach unten durch die Öffnung in der Stützoberfläche und in das zentrale Loch (24) durch die Bodenplatte (14) erstreckt, wobei die Vorspannvorrichtung in der ersten Position der Vorspannvorrichtung relativ zu der Bodenplatte und die Stützoberfläche des Körpers das distale Ende der Bohrschneide über der unteren Oberfläche der Bodenplatte positionieren.

4. Anordnung nach einem der Ansprüche 1 oder 3, wobei:
die Vorspannvorrichtung (28) eine einer Vielzahl von gleichen Schraubenfedern (32, 34, 36) ist, die an der oberen Oberfläche (26) der Bodenplatte (14) befestigt sind, wobei jede Schraubenfeder der Vielzahl von Schraubenfedern ein oberes Ende aufweist; und
der Körper (42) an den oberen Enden der Vielzahl von Schraubenfedern befestigt ist,
vorzugsweise wobei die Vielzahl von Schraubenfedern eine kombinierte Federkraft aufweist, die, wenn das Schneidewerkzeug (108) auf der Stützoberfläche (44) gestützt ist und keine äußere Last auf das Schneidewerkzeug ausgeübt wird, die Vielzahl von Schraubenfedern sich in den nicht komprimierten Positionen der Schraubenfedern befinden und das distale Ende der Bohrschneide (112) über der unteren Oberfläche (16) der Bodenplatte positionieren.

5. Anordnung nach Anspruch 4, wobei die Vielzahl von Schraubenfedern (32, 34, 36) um das zentrale Loch (24) herum durch die Bodenplatte (14) und die Öffnung (45) durch die Stützoberfläche (44) räumlich gleichmäßig eingerichtet ist.

6. Anordnung nach einem der Ansprüche 1 bis 5, ferner umfassend:
eine Ausrichtungsvorrichtung (78), die an der oberen Oberfläche (26) der Bodenplatte (14) befestigt ist, wobei sich die Ausrichtungsvorrichtung von der oberen Oberfläche nach oben und durch den Körper (42) erstreckt, wobei die Ausrichtungsvorrichtung, die sich durch den Körper erstreckt, konfiguriert ist, um den Körper in Ausrichtung mit der Bodenplatte zu halten, während der Körper zu der Bodenplatte hin bewegt wird, wobei die Vorspannvorrichtung (28) veranlasst wird, sich in ihre komprimierte Position zu bewegen, und der Körper von der Bodenplatte durch die Vorspannvorrichtung weg bewegt wird, die sich von der komprimierten Position zu der nicht komprimierten Position hin bewegt.

7. Anordnung nach einem der Ansprüche 1 bis 6, ferner umfassend:
eine Führungsstange (82, 84, 86) auf der oberen Oberfläche (26) der Bodenplatte (14), wobei sich die Führungsstange von der oberen Oberfläche entlang einer Linie nach oben erstreckt, die senkrecht zu der unteren Oberfläche der Bodenplatte verläuft, wobei sich die Führungsstange von der oberen Oberfläche zu einem oberen Ende (96, 98, 102) der Führungsstange nach oben erstreckt, wobei
der Körper (42) an der Führungsstange für Hin- und Herbewegungen des Körpers entlang der Führungsstange zwischen einer ersten Position des Körpers relativ zu der Bodenplatte und einer zweiten Position des Körpers relativ zu der Bodenplatte montiert ist, wobei die Führungsstange den Körper direkt über der oberen Oberfläche der Bodenplatte positioniert und hält und wobei die Führungsstange und die Stützoberfläche (44) des Körpers ein distales Ende des Schneideeinsatzes in einer ersten Position des distalen Endes des Schneideeinsatzes (112) relativ zu der Bodenplatte über der unteren Oberfläche (16) der Bodenplatte positionieren; und
die Vorspannvorrichtung (28) den Körper an der ersten Position des Körpers relativ zu der Bodenplatte positioniert, wenn keine äußere Last auf den Körper ausgeübt wird, und die Vorspannvorrichtung es dem Körper ermöglicht, sich von der ersten Position des Körpers relativ zu der Bodenplatte in die zweite Position des Körpers relativ zu der Bodenplatte zu bewegen, als Reaktion auf eine äußere Last, die nach unten auf den Körper ausgeübt wird.

8. Anordnung nach Anspruch 7, wobei die Führungsstange eine von einer Vielzahl von Führungsstangen (82, 84, 86) ist, die an der oberen Oberfläche (16) der Bodenplatte (14) befestigt sind, wobei die Vielzahl von Führungsstangen parallel zueinander sind.

9. Anordnung nach Anspruch 8, wobei die Vielzahl von Führungsstangen (82, 84, 86) um das zentrale Loch (24) herum durch die Bodenplatte (14) räumlich gleichmäßig eingerichtet ist.

10. Anordnung nach einem der Ansprüche 1 bis 9, wobei der Körper (42) mindestens eine Seitenwand (46) aufweist, die sich von der Stützoberfläche (44) nach oben erstreckt, wobei die Seitenwand konfiguriert ist, um gegen einen Abschnitt des Schneidewerkzeugs (108) einzugreifen, der auf der Stützoberfläche gestützt ist, und das Schneidewerkzeug relativ zu der Stützoberfläche zu positionieren.

11. Anordnung nach Anspruch 10, wobei die Seitenwand (46) konfiguriert ist, um mindestens um die Hälfte des Schneidewerkzeugs (108) herum einzugreifen, das auf der Stützoberfläche (44) gestützt ist, und das Schneidewerkzeug relativ zu der Stützoberfläche zu positionieren.

12. Anordnung nach einem der Ansprüche 1 bis 11, wobei die Bodenplatte (14) einen Umfangsrand (18) aufweist, der gekrümmt ist, während sich der Umfangsrand von der unteren Oberfläche (16) der Bodenplatte zu einem oberen Ende des Umfangsrands nach oben erstreckt.

13. Anordnung nach einem der vorstehenden Ansprüche, wobei der verriegelnder Kraftvorschubbohrmotor ein Luftfahrzeugbaumotorbohrer ist, wie ein Orbitalbohrer.

14. Verfahren zum Gewichtsausgleichen eines Schneidewerkzeugs (108), das Verfahren umfassend:
Positionieren einer Bodenplatte (14) einer Gewichtsausgleichseinrichtung (12) an einer ersten Position auf einer Arbeitsoberfläche, in die ein Schneidevorgang zu erfolgen ist;
Vorspannen eines Körpers (42) der Gewichtsausgleichseinrichtung von der Bodenplatte weg;
Positionieren des Schneidewerkzeugs an dem Körper der Gewichtsausgleichseinrichtung;
Ausüben einer nach unten gerichteten Kraft auf das Schneidewerkzeug und Bewegen des Schneidewerkzeugs nach unten gegen die Vorspannung des Körpers von der Bodenplatte weg in eine Schneideposition des Schneidewerkzeugs, sodass die Nase des Schneidewerkzeugs (108) unter einer unteren Oberfläche (16) der Bodenplatte (14) hervorsteht;
Verriegeln des Schneidewerkzeugs in eine ausgewählte Bohrbuchse einer zu bohrenden Arbeitsoberfläche; und
Durchführen des Schneidevorgangs in die Arbeitsoberfläche.
Positionieren der Bodenplatte (14) der Gewichtsausgleichseinrichtung (12) an einer zweiten Position auf der Arbeitsoberfläche, in die ein zweiter Schneidevorgang zu erfolgen ist, durch Schieben der Bodenplatte über die Arbeitsoberfläche.

15. Verfahren nach Anspruch 14, ferner umfassend:
Entriegeln des Schneidewerkzeugs von der ausgewählten Bohrbuchse;
Entfernen der nach unten gerichteten Kraft, die auf das Schneidewerkzeug (108) ausgeübt wird;
Vorspannen des Körpers (42) der Gewichtsausgleichseinrichtung (12) von der Bodenplatte (14) weg; und
Bewegen des Schneidewerkzeugs von der Schneideposition weg.

## Revendications

1. Ensemble comprenant :
- un outil de coupe (108) comprenant un moteur de perceuse à alimentation électrique de verrouillage ; et
- un appareil de contrebalancement (12) pour des opérations de coupe sur une surface orientée horizontalement, dans lequel l'appareil de contrebalancement est conçu pour faire réagir des charges de la perceuse à moteur contre une structure existante d'un aéronef, l'appareil comprenant :
- une plaque de base (14), la plaque de base ayant une surface inférieure (16) qui est plate, la surface inférieure étant conçue pour être orientée horizontalement lorsque la surface inférieure est positionnée sur une surface de travail séparée qui est orientée horizontalement ;
- un trou central (24) à travers la plaque de base ;
- une surface supérieure (26) de la plaque de base, la surface supérieure s'étendant autour du trou central ;
- un dispositif de sollicitation (28) sur la surface supérieure de la plaque de base, le dispositif de sollicitation s'étendant vers le haut à partir de la surface supérieure jusqu'à une extrémité supérieure du dispositif de sollicitation, le dispositif de sollicitation étant déplaçable entre une position non compressée du dispositif de sollicitation par rapport à la surface supérieure où le dispositif de sollicitation s'étend d'une première distance à partir de la surface supérieure et une position compressée du dispositif de sollicitation où le dispositif de sollicitation s'étend d'une seconde distance à partir de la surface supérieure, la seconde distance étant plus petite que la première distance ; et,
- un corps (42) sur l'extrémité supérieure du dispositif de sollicitation, le corps (42) ayant une surface de support (44) sur le corps, la surface de support supportant l'outil de coupe (108), le dispositif de sollicitation lorsqu'il est dans la position non compressée du dispositif de sollicitation par rapport à la surface supérieure positionnant et maintenant le corps dans une première position du corps par rapport à la plaque de base où le corps est espacé d'une première distance de la plaque de base, et le dispositif de sollicitation lorsqu'il est déplacé jusqu'à la position compressée du dispositif de sollicitation par rapport à la surface supérieure en réponse à une charge dirigée vers le bas exercée sur le corps positionnant et maintenant le corps dans une seconde position du corps par rapport à la plaque de base où le corps est espacé d'une seconde distance de la plaque de base, la seconde distance étant plus petite que la première distance ;
dans lequel le trou central accueille un nez de verrouillage du moteur de perceuse à alimentation électrique de verrouillage et un foret de coupe (112) du moteur de perceuse à alimentation électrique de verrouillage à travers le trou central, dans lequel, lorsque le corps (42) est dans la seconde position, le nez du moteur de perceuse fait saillie sous la surface inférieure (16) de la plaque de base (14) de telle sorte que le moteur de perceuse peut être verrouillé dans une douille de perçage (104) sur une surface de travail (106) à percer et que l'outil de coupe est indexable dans la douille de perçage.

2. Ensemble selon la revendication 1, dans lequel la surface de support (44) est sur le corps (42) et le dispositif de sollicitation (28) supporte l'outil de coupe (108) sur la surface de support au niveau de la première position du corps par rapport à la plaque de base (14) avec le dispositif de sollicitation dans la position non compressée du dispositif de sollicitation, et la surface de support et le dispositif de sollicitation supportent l'outil de coupe sur la surface de support au niveau de la seconde position du corps par rapport à la plaque de base avec le dispositif de sollicitation dans la position compressée du dispositif de sollicitation en réponse à une charge dirigée vers le bas exercée sur l'outil de coupe qui exerce la charge dirigée vers le bas sur le corps.

3. Ensemble selon la revendication 1 ou 2, comprenant en outre :
une ouverture (45) à travers la surface de support (44) du corps (42), la surface de support supportant l'outil de coupe (108) sur la surface de support avec le foret de coupe (112) de l'outil de coupe s'étendant vers le bas à partir de l'outil de coupe, à travers l'ouverture dans la surface de support et dans le trou central (24) à travers la plaque de base (14) où le dispositif de sollicitation dans la première position du dispositif de sollicitation par rapport à la plaque de base et la surface de support du corps positionnent l'extrémité distale du foret de coupe au-dessus de la surface inférieure de la plaque de base.

4. Ensemble selon l'une quelconque des revendications 1 à 3, dans lequel :
le dispositif de sollicitation (28) est l'un d'une pluralité de ressorts de type hélicoïdal (32, 34, 36) qui sont fixés à la surface supérieure (26) de la plaque de base (14), chaque ressort hélicoïdal de la pluralité de ressorts hélicoïdaux ayant une extrémité supérieure ; et,
le corps (42) est fixé aux extrémités supérieures de la pluralité de ressorts hélicoïdaux,
de préférence dans lequel la pluralité de ressorts hélicoïdaux a une force de ressort combinée qui, lorsque l'outil de coupe (108) est supporté sur la surface de support (44) et qu'aucune charge externe n'est exercée sur l'outil de coupe, la pluralité de ressorts hélicoïdaux sont dans les positions non compressées des ressorts hélicoïdaux et positionnent l'extrémité distale du foret de coupe (112) au-dessus de la surface inférieure (16) de la plaque de base.

5. Ensemble selon la revendication 4, dans lequel la pluralité de ressorts hélicoïdaux (32, 34, 36) est agencée spatialement de manière égale autour du trou central (24) à travers la plaque de base (14) et de l'ouverture (45) à travers la surface de support (44).

6. Ensemble selon l'une quelconque des revendications 1 à 5, comprenant en outre :
un dispositif d'alignement (78) fixé à la surface supérieure (26) de la plaque de base (14), le dispositif d'alignement s'étendant vers le haut à partir de la surface supérieure et à travers le corps (42), le dispositif d'alignement s'étendant à travers le corps étant conçu pour maintenir le corps en alignement avec la plaque de base alors que le corps est déplacé vers la plaque de base amenant le dispositif de sollicitation (28) à se déplacer jusqu'à sa position compressée, et le corps est déplacé à l'écart de la plaque de base par le dispositif de sollicitation se déplaçant à partir de la position compressée vers la position non compressée.

7. Ensemble selon l'une quelconque des revendications 1 à 6, comprenant en outre :
une tige de guidage (82, 84, 86) sur la surface supérieure (26) de la plaque de base (14), la tige de guidage s'étendant vers le haut à partir de la surface supérieure le long d'une ligne qui est perpendiculaire à la surface inférieure de la plaque de base, la tige de guidage s'étendant vers le haut à partir de la surface supérieure jusqu'à une extrémité supérieure (96, 98, 102) de la tige de guidage, dans lequel
le corps (42) est monté sur la tige de guidage pour des déplacements en va-et-vient du corps le long de la tige de guidage entre une première position du corps par rapport à la plaque de base et une seconde position du corps par rapport à la plaque de base, dans lequel la tige de guidage positionne et maintient le corps directement au-dessus de la surface supérieure de la plaque de base, et dans lequel la tige de guidage et la surface de support (44) du corps positionnent une extrémité distale du foret de coupe dans une première position de l'extrémité distale du foret de coupe (112) par rapport à la plaque de base au-dessus de la surface inférieure (16) de la plaque de base ; et,
le dispositif de sollicitation (28) positionne le corps au niveau de la première position du corps par rapport à la plaque de base lorsqu'aucune charge externe n'est exercée sur le corps, et le dispositif de sollicitation permettant au corps de se déplacer à partir de la première position du corps par rapport à la plaque de base jusqu'à la seconde position du corps par rapport à la plaque de base en réponse à une charge externe exercée vers le bas sur le corps.

8. Ensemble selon la revendication 7, dans lequel la tige de guidage est l'une d'une pluralité de tiges de guidage (82, 84, 86) qui sont fixées à la surface supérieure (16) de la plaque de base (14), la pluralité de tiges de guidage étant parallèles les unes aux autres.

9. Ensemble selon la revendication 8, dans lequel la pluralité de tiges de guidage (82, 84, 86) sont agencées spatialement de manière égale autour du trou central (24) à travers la plaque de base (14).

10. Ensemble selon l'une quelconque des revendications 1 à 9, dans lequel le corps (42) a au moins une paroi latérale (46) s'étendant vers le haut à partir de la surface de support (44), la paroi latérale étant conçue pour venir en prise contre une partie de l'outil de coupe (108) supporté sur la surface de support et positionner l'outil de coupe par rapport à la surface de support.

11. Ensemble selon la revendication 10, dans lequel la paroi latérale (46) est conçue pour venir en prise autour au moins de la moitié de l'outil de coupe (108) supporté sur la surface de support (44) et positionner l'outil de coupe par rapport à la surface de support.

12. Ensemble selon l'une quelconque des revendications 1 à 11, dans lequel la plaque de base (14) a un bord périphérique (18) qui est incurvé alors que le bord périphérique s'étend vers le haut à partir de la surface inférieure (16) de la plaque de base jusqu'à une extrémité supérieure du bord périphérique.

13. Ensemble selon l'une quelconque des revendications précédentes, dans lequel le moteur de perceuse à alimentation électrique de verrouillage est une perceuse à moteur de construction d'aéronef, telle qu'une perceuse orbitale.

14. Procédé de contrebalancement d'un outil de coupe (108), le procédé comprenant :
le positionnement d'une plaque de base (14) d'un appareil de contrebalancement (12) au niveau d'une première position sur une surface de travail dans laquelle une opération de coupe doit avoir lieu ;
la sollicitation d'un corps (42) de l'appareil de contrebalancement à l'écart de la plaque de base ;
le positionnement de l'outil de coupe sur le corps de l'appareil de contrebalancement ;
l'exercice d'une force dirigée vers le bas sur l'outil de coupe et le déplacement de l'outil de coupe vers le bas contre la sollicitation du corps à l'écart de la plaque de base jusqu'à une position de coupe de l'outil de coupe, de sorte que le nez de l'outil de coupe (108) fait saillie en dessous d'une surface inférieure (16) de la plaque de base (14) ;
le verrouillage de l'outil de coupe dans une douille de perçage choisie d'une surface de travail à percer ; et,
la réalisation de l'opération de coupe dans la surface de travail.
le positionnement de la plaque de base (14) de l'appareil de contrebalancement (12) au niveau d'une seconde position sur la surface de travail dans laquelle une seconde opération de coupe doit avoir lieu en faisant glisser la plaque de base sur la surface de travail.

15. Procédé selon la revendication 14, comprenant en outre :
le déverrouillage de l'outil de coupe de la douille de perçage choisie ;
le retrait de la force dirigée vers le bas exercée sur l'outil de coupe (108) ;
la sollicitation du corps (42) de l'appareil de contrebalancement (12) à l'écart de la plaque de base (14) ; et,
le déplacement de l'outil de coupe à l'écart de la position de coupe.
